# EUROPÄISCHE PATENTSCHRIFT

(11) **EP 1 424 926 B1**
(45) Veröffentlichungstag und Bekanntmachung des Hinweises auf die Patenterteilung: **29.12.2004**
(21) Anmeldenummer: 02797615.8
(22) Anmeldetag: 23.08.2002
(51) Int. Cl.: A47J 19/02

(54) **FRUCHTPRESSE**
FRUIT PRESS
PRESSE-FRUITS

(30) Priorität: 30.08.2001 DE 10142506
(43) Veröffentlichungstag der Anmeldung: 09.06.2004
(73) Patentinhaber: BSH Bosch und Siemens Hausgeräte GmbH, 81739 München (DE)
(72) Erfinder: AREH, Marko, 2360 Radlje ob Dravi (SI); BREZOVNIK, Peter, 3330 Mozirje (SI); KRAMER, Siegmund, 83417 Kirchanschöring (DE); MAZEJ, Stanislav, 3303 Gomilsko (SI); PAVLOVIC, Henrik, Ljubno ob Savin 3333 (SI); STEFFL, Michael, 83250 Marquartstein (DE); ZIBRET, Igor, 3327 Smartno ob Paki (SI)
(86) Internationale Anmeldenummer: PCT/EP2002/009463
(87) Internationale Veröffentlichungsnummer: WO 2003/020092

(56) Entgegenhaltungen:
- EP-A- 0 362 058
- US-A- 1 533 208
- US-A- 2 032 477

## Beschreibung

Die Erfindung betrifft eine Fruchtpresse mit einem Auffangbehältnis mit einem herausragenden Element zum Auspressen einer Hälfte einer safthaltigen Frucht und mit einer Auffangschale zum Auffangen von aus Auslassöffnungen des Auffangbehältnisses herauslaufenden Fruchtsafts.

Derartige Fruchtpressen zum Auspressen von Zitrusfrüchten sind allgemein bekannt. Ein mittig angeordnetes, aus einem Auffangbehältnis herausragendes Element, das im wesentlichen als Rotationsparaboloid ausgebildet ist, dient zum Auffangen von aus der Frucht herausgequetschtem Fruchtfleisch und Fruchtsaft. Während der Fruchtsaft aus Auslassöffnungen im Bodenbereich des Auffangbehältnisses in die Auffangschale herausläuft, bleibt das Fruchtfleisch in dem Auffangbehältnis hängen.

Andererseits ist aus der EP 0 362 058 B1 eine durch einen Elektromotor angetriebene Fruchtpresse bekannt. Auffangbehältnis und Auffangschale werden von einem Gehäuse aufgenommen. Durch die Mitte der Auffangschale ragt eine Antriebswelle hindurch, die das herausragende Element und mit diesem das Auffangbehältnis in Drehbewegung versetzt.

Es ist die Aufgabe der Erfindung, eine Fruchtpresse zu schaffen, deren Bedienung vereinfacht ist.

Diese Aufgabe wird bei einer Fruchtpresse der eingangs genannten Art dadurch gelöst, dass die Auffangschale schwenkbar in einem Gehäuse gelagert ist. Durch die Lagerung der Auffangschale an zwei Punkten ergeben sich im wesentlichen zwei Stellungen, die diese einnimmt. In einer ersten Position ist die Auffangschale von einer Ausschüttöffnung, die sie besitzt, zurückgeneigt, wodurch das Auslaufen von Fruchtsaft verhindert wird. In einer zweiten Position ist die Auffangschale zu einer Auslassöffnung hingeneigt, so dass sämtlicher Fruchtsaft, der sich in der Auffangschale angesammelt hat, aus ihr herausläuft.

Wenn nun die Auffangschale aus ihrer Gleichgewichtsstellung herausgeschwenkt wird, fließt bei Überschreiten eines von dem Schwenkwinkel abhängigen Niveaus Fruchtsaft aus der Auffangschale heraus und lässt sich in einem Trinkgefäß oder einem Krug auffangen. Auf diese Weise entfällt das Abheben des Auffangbehältnisses von der Auffangschale. Beim Verschwenken der Auffangschale lässt sich der Fruchtsaft tropfen- und verlustfrei entnehmen, während beim bekannten Abheben des Auffangbehältnisses die Gefahr besteht, dass von diesem Fruchtsaft heruntertropft und Verunreinigungen verursacht, die meistens zusätzlich noch klebrig sind. Außerdem geht ein entsprechender nutzbarer Teil des Fruchtsafts für den Trinkgenuss verloren. Durch die Schwenklösung schafft hier die Erfindung Abhilfe. Das Auffangbehältnis muss erstmalig dann aus dem Gehäuse herausgenommen werden, wenn die Auslassöffnungen durch Fruchtfleisch verstopft sind und sich der Fruchtsaft in dem Auffangbehältnis zurückstaut.

In einer bevorzugten Ausführungsform weist die Fruchtpresse auf der Außenseite ihrer Mantelwand zwei einander gegenüberliegende Vorsprünge auf, die auf ihrer Unterseite eine wenigstens im wesentliche kreisförmige Rundung haben, die jeweils in einer kreisförmigen Aufnahme in dem Gehäuse aufliegen.

Besonders geeignet ist eine Fruchtpresse, bei der die Aufnahmen als Vertiefungen eines oberen Randes oder in der Nähe des oberen Randes einer Mantelwand des Gehäuses ausgebildet sind.

Vorzugsweise hat die Fruchtpresse eine Ausschüttöffnung, die um 90° versetzt zu den Vorsprüngen angeordnet ist und die durch die Mantelwand des Gehäuses hindurchragt. Durch die Öffnung lässt sich auf einfache Weise der Fruchtsaft aus der Fruchtpresse entnehmen.

Wenn die Fruchtpresse durch einen motorischen Antrieb angetrieben ist, d. h., dass das Element und mit diesem das Auffangbehältnis rotiert, ist eine zentrale Öffnung in der Bodenwand der Auffangschale vorgesehen, durch die ein Wellenzapfen einer Antriebswelle zum Antreiben des Elements hindurchragt.

In einer weiteren vorteilhaften Variante ist oberhalb der Auslassöffnung der Auffangschale eine Handhabe, etwa in Form eines Griffes, angeordnet. Bei Druck auf die Handhabe oder durch Ziehen der Handhabe nach oben wird die Auffangschale verschwenkt.

Bevorzugt weist die Fruchtpresse eine Schnaupe auf, die ein leichtes Herausschütten des Fruchtsafts ermöglicht.

In einer geeigneten Variante der Fruchtpresse hat die Auffangschale einen Verschwenkwinkel, der nach oben durch einen auf dem Gehäuse aufgesetzten, nach innen weisenden Kragen begrenzt ist.

Um ein Überfließen des Fruchtsafts aus der Auffangschale über die die zentrale Öffnung in ihrer Bodenwand umgebende Wand zu vermeiden, ragt diese höher auf als der höchste in ihr erreichbare Pegel des Fruchtsafts.

Vorzugsweise ist die Fruchtpresse so aufgebaut, dass das Gehäuse unterhalb der Auffangschale eine Bodenwand aufweist, die den Verschwenkwinkel der Auffangschale nach unten begrenzt.

Eine hierzu geeignete Ausführungsform der Fruchtpresse besteht darin, dass die Bodenwand ausgehend von einer durch ihren Mittelpunkt verlaufenden und zu der Verschwenkachse parallelen Linie zu beiden Seiten nach unten geneigt ist.

Um die Fruchtpresse fest positionieren zu können, ist ein Rastmittel in dem Gehäuse vorhanden sind, durch das wenigstens eine erste Position, in der die Auffangschale mit Fruchtsaft auffüllbar ist, und eine zweite Position, in der die Auffangschale durch die Auslassöffnung entleerbar ist, festgelegt sind. Auch weitere Positionen lassen sich festlegen, wenn die Auffangschale in entsprechenden Raststellungen in dem Gehäuse einrasten kann.

Nachstehend wird die Erfindung in einem Ausführungsbeispiel anhand der Figuren näher erläutert. Es zeigen:
- Fig. 1:: eine in ein Gehäuse eingebrachte Auffangschale für eine Fruchtpresse im Längsschnitt und
- Fig. 2:: die Auffangschale gemäß Fig. 1 in einem weiteren Längsschnitt, der im rechten Winkel zu dem Längsschnitt gemäß Fig. 1 angeordnet ist.

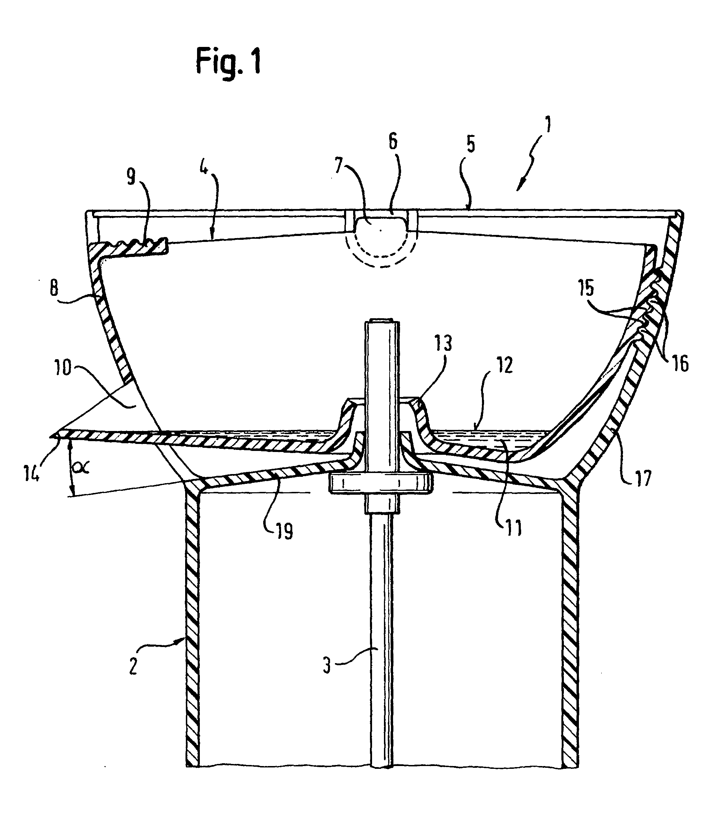

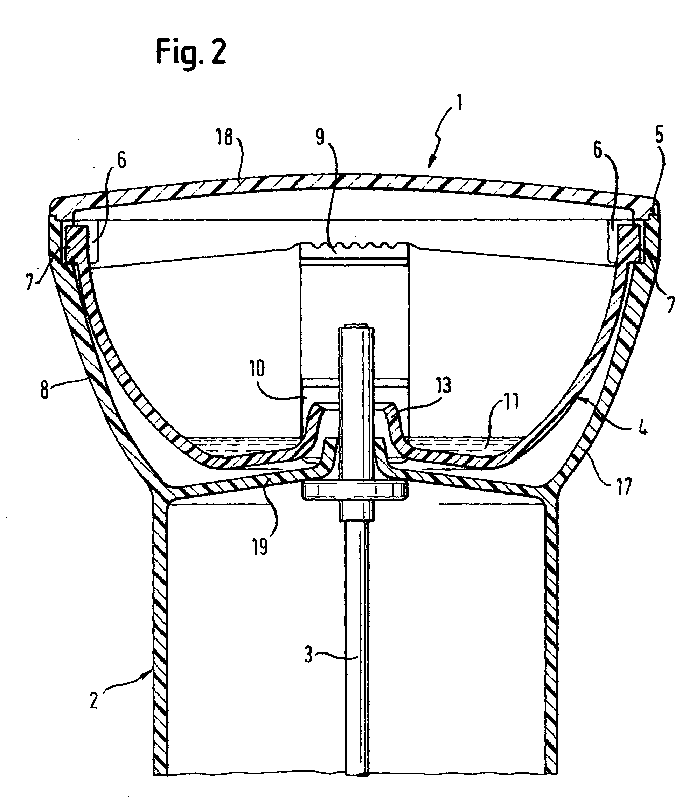

Eine Fruchtpresse 1 (Fig. 1, 2) weist ein im wesentlichen als Hohlzylinder ausgebildetes Gehäuse 2 auf. In diesem ist ein (hier nicht dargestellter) motorischer Antrieb für ein aufragendes, mittig angeordnetes Element angeordnet, im wesentlichen die Form eines Rotationsparaboloids mit auf dessen Außenwand angeordneten Graten zum Auspressen einer Zitrusfrucht aufweist und das fest mit einem (hier ebenfalls nicht dargestellten) aber in Verbindung mit dem Element z. B. aus der EP 0 362 058 B1 bekannten Auffangbehältnis verbunden ist und zusammen mit diesem über eine Antriebswelle 3 von dem Elektromotor angetrieben wird. Dabei entstehender Fruchtsaft tropft aus Auslassöffnungen des Auffangbehältnisses in eine Auffangschale 4, die im wesentlichen unterhalb des Auffangbehältnisses und zusätzlich vorzugsweise auch noch seitlich, dieses umgebend angeordnet ist.

Das Gehäuse 2 weist im Bereich seiner oberen Kante 5 zwei einander gegenüberliegende Aufnahmen 6 auf, die jeweils einen Vorsprung 7 aufnehmen, der auf der Außenseite einer Mantelwand 8 der Auffangschale 4 befestigt ist. Die Vorsprünge 7 haben auf ihrer Unterseite eine im wesentlichen kreisbogenförmige Kontur, mit der sie auf den Aufnahmen 6 aufliegen. Mittels der Vorsprünge 7 lässt sich die Auffangschale 4 um einen Winkel α verschwenken. Zur Ausführung der Schwenkbewegung dient eine Handhabe 9, die im Bereich der oberen Kante der Mantelwand 8 oberhalb einer Öffnung 10 der Auffangschale 4 angeordnet ist. Wenn ein Bediener auf die Handhabe 9 drückt, wird die Handhabe 9 nach unten gedrückt, so dass Fruchtsaft 11, der in der Auffangschale 4 bis zu einem Niveau 12 steht aus der Öffnung 10 herausläuft. In der in Fig. 1 dargestellten Position ist die Auffangschale 4 in der Position, in der sie sich mit dem Fruchtsaft 11 befüllen lässt. Dabei hat die Auffangschale 4 eine an eine die Antriebswelle 3 umgebende Öffnung angrenzende Wand 13, deren obere Kante genügend hoch aufragt, um in jeder Schwenkstellung der Auffangschale 4 zu verhindern, dass der Fruchtsaft 11 über die obere Kante der Wand 13 herunterläuft.

Im Bereich der Öffnung 10 hat die Auffangschale 4 eine Schnaupe 14, die das Ausschütten des Fruchtsafts 11 erleichtert.

Auf der der Öffnung 10 gegenüberliegenden Seite hat die Auffangschale 4 auf der Außenseite ihrer Mantelwand 8 Rasten 15, die mit Gegenrasten 16 auf der Innenseite einer Mantelwand 17 des Gehäuses 2 derart zusammenwirken, dass die Auffangschale 4 jeweils in der Rastposition verbleibt, in die sie durch Betätigung der Handhabe 9 hineingeschwenkt wurde.

Auf die Gehäusewand 17 wird oberhalb des Auffangbehältnisses und der Auffangschale 4 ein Kragen 18 aufgesetzt, der verhindert, dass die Auffangschale 4 über einen vorgegebenen Winkel hinaus nach oben verschwenkt wird. Nach unten wird die Verschwenkbarkeit der Auffangschale 4 durch eine Bodenwand 19 in dem Gehäuse 2 begrenzt. Die Bodenwand 19 ist dabei bezüglich einer durch ihren Mittelpunkt verlaufenden, zu der Verschwenkachse der Auffangschale 4 parallelen Linie zu beiden Seiten hin, d. h. zu der Öffnung 10 hin und zu der von der Öffnung 10 abgewandten Seite hin, leicht nach unten geneigt, um zu gewährleisten, dass sich die Auffangschale 4 verschwenken lässt.

Durch die Erfindung wird eine Fruchtpresse 1 mit einer schwenkbaren Auffangschale 4 geschaffen, die ein einfaches und verlustfreies Ausschütten des Fruchtsafts 11 ermöglicht, ohne das Element, durch das die Zitrusfrucht ausgepresst wird, und das dieses umgebende Auffangbehältnis, aus dem der Fruchtsaft in die Auffangschale 4 herabtropft, aus dem Gehäuse 2 entnehmen zu müssen. Um die Auffangschale 4 zu verschwenken, sind an der Außenseite ihrer Mantelwand 8 zwei einander gegenüberliegende Vorsprünge 7 vorgesehen, die in Aufnahmen 6 an der Innenseite der Gehäusewand 17 drehbeweglich liegen.

## Patentansprüche

1. Fruchtpresse (1) mit einem Auffangbehältnis mit einem herausragenden Element zum Auspressen einer Hälfte einer safthaltigen Frucht und mit einer Auffangschale (4) zum Auffangen von aus Auslassöffnungen des Auffangbehältnisses herauslaufenden Fruchtsafts, **dadurch gekennzeichnet, dass** die Auffangschale (4) schwenkbar in einem Gehäuse (2) gelagert ist.

2. Fruchtpresse (1) nach Anspruch 1, **dadurch gekennzeichnet, dass** die Auffangschale (4) auf der Außenseite ihrer Mantelwand (8) zwei einander gegenüberliegende Vorsprünge (7) aufweist, die auf ihrer Unterseite eine wenigstens im wesentliche kreisförmige Rundung haben, die jeweils in einer kreisförmigen Aufnahme (6) in dem Gehäuse (2) aufliegen.

3. Fruchtpresse (1) nach Anspruch 2, **dadurch gekennzeichnet, dass** die Aufnahmen (6) als Vertiefungen eines oberen Randes (5) oder in der Nähe des oberen Randes (5) einer Mantelwand (17) des Gehäuses (2) ausgebildet sind.

4. Fruchtpresse (1) nach einem der Ansprüche 2 oder 3, **dadurch gekennzeichnet, dass** sie eine Auslassöffnung (10) hat, die um 90° versetzt zu den Vorsprüngen (7) angeordnet ist und die durch die Mantelwand (17) des Gehäuses (2) hindurchragt.

5. Fruchtpresse (1) nach einem der Ansprüche 1 bis 4, **dadurch gekennzeichnet, dass** sie eine zentrale Öffnung in ihrer Bodenwand hat, durch die einer Antriebswelle (3) zum Antreiben des Elements hindurchragt.

6. Fruchtpresse (1) nach einem der Ansprüche 1 bis 5, **dadurch gekennzeichnet, dass** oberhalb der Auslassöffnung (10) eine Handhabe (9) angeordnet ist, mittels der die Auffangschale (4) schwenkbar ist.

7. Fruchtpresse (1) nach einem der Ansprüche 1 bis 6, **dadurch gekennzeichnet, dass** die Auslassöffnung (10) eine Schnaupe (14) aufweist.

8. Fruchtpresse (1) nach Anspruch 7, **dadurch gekennzeichnet, dass** der Verschwenkwinkel der Auffangschale (4) nach oben durch einen auf dem Gehäuse (2) aufgesetzten, nach innen weisenden Kragen (18) begrenzt ist.

9. Fruchtpresse (1) nach einem der Ansprüche 5 bis 8, **dadurch gekennzeichnet, dass** eine die zentrale Öffnung umgebende Wand der Auffangschale (4) höher aufragt als das höchste in ihr erreichbare Niveau (12) des Fruchtsafts (11).

10. Fruchtpresse (1) nach einem der Ansprüche 1 bis 9, **dadurch gekennzeichnet, dass** das Gehäuse (2) unterhalb der Auffangschale (4) eine Bodenwand (19) aufweist, die den Verschwenkwinkel der Auffangschale (4) nach unten begrenzt.

11. Fruchtpresse (1) nach Anspruch 10, **dadurch gekennzeichnet, dass** die Bodenwand (19) ausgehend von einer durch ihren Mittelpunkt verlaufenden und zu der Verschwenkachse parallelen Linie zu beiden Seiten nach unten geneigt ist.

12. Fruchtpresse (1) nach einem der Ansprüche 1 bis 11, **dadurch gekennzeichnet, dass** an der Auffangschale (4) ein mit einem Rastmittel (16) des Gehäuses (2) zusammenwirkendes Rastmittel (15) vorhanden sind, durch das wenigstens eine erste Position, in der die Auffangschale (4) mit dem Fruchtsaft (11) auffüllbar ist, und eine zweite Position, in der die Auffangschale (4) durch die Auslassöffnung (10) entleerbar ist, festgelegt sind.

## Claims

1. Fruit press (1) with a collecting container with a protruding element for pressing out half of a piece of a fruit containing juice and with a collecting bowl (4) for collection of fruit juice running out of outlet openings of the collecting container, **characterised in that** the collecting bowl (4) is mounted in a housing (2) to be pivotable.

2. Fruit press (1) according to claim 1, **characterised in that** the collecting bowl (4) has on the outer side of its circumferential wall (8) two mutually opposite projections (7) which have on the underside thereof an at least substantially circular radiussing which rests each time in a circular receptacle (6) in the housing (2).

3. Fruit press (1) according to claim 2, **characterised in that** the receptacles (6) are formed as depressions of an upper edge (5) or in the vicinity of the upper edge (5) of a circumferential wall (17) of the housing (2).

4. Fruit press (1) according to one of claims 2 and 3, **characterised in that** it has an outlet opening (10) which is arranged to be offset by 90° relative to the projections (7) and which protrudes through the circumferential wall (17) of the housing (2).

5. Fruit press (1) according to one of claims 1 to 4, **characterised in that** it has a central opening in its base wall through which a drive shaft (3) for driving the element projects.

6. Fruit press (1) according to one of claims 1 to 5, **characterised in that** a handle (9) by means of which the collecting bowl (4) is pivotable is arranged above the outlet opening (10).

7. Fruit press (1) according to one of claims 1 to 6, **characterised in that** the outlet opening (10) has a spout (14).

8. Fruit press (1) according to claim 7, **characterised in that** the pivot angle of the collecting bowl (4) is limited upwardly by an inwardly facing collar (18) placed on the housing (2).

9. Fruit press (1) according to one of claims 5 to 8, **characterised in that** a wall, which surrounds the central opening, of the collecting bowl (4) protrudes higher than the highest level (12), which can be reached therein, of the fruit juice (11).

10. Fruit press (1) according to one of claims 1 to 9, **characterised in that** the housing (2) has below the collecting bowl (4) a base wall (19) which downwardly limits the pivot angle of the collecting bowl (4).

11. Fruit press (1) according to claim 10, **characterised in that** the base wall (19) is inclined downwardly at both sides going out from a line extending through the centre point thereof and parallel to the pivot axis.

12. Fruit press (1) according to one of claims 1 to 11, **characterised in that** a detent means (15), which co-operates with a detent means (16) of the housing (2) and by which at least one first position in which the collecting bowl (4) can be filled with the fruit juice (11) and a second position in which the collecting bowl (4) can be emptied via the outlet opening (10) are fixed, is present at the collecting bowl.

## Revendications

1. Presse-fruits (1), avec un récipient collecteur avec un élément saillant pour presser une moitié d'un fruit juteux et avec une coupelle collectrice (4) pour collecter du jus de fruit qui s'écoule à travers des orifices de sortie du récipient collecteur, **caractérisé en ce que** la coupelle collectrice (4) est logée de façon pivotante dans un boîtier (2).

2. Presse-fruits (1) selon la revendication 1, **caractérisé en ce que** la coupelle collectrice (4) est munie sur la face externe de la paroi de son enveloppe (8) de deux saillies (7) qui se font face, qui sont dotées sur leur face inférieure d'un arrondi au moins sensiblement circulaire, qui reposent respectivement dans un logement circulaire (6) dans le boîtier (2).

3. Presse-fruits (1) selon la revendication 2, **caractérisé en ce que** les logements (6) sont conçus sous la forme de creux ménagés dans un bord supérieur (5) ou à proximité du bord supérieur (5) d'une paroi d'enveloppe (17) du boîtier (2).

4. Presse-fruits (1) selon l'une quelconque des revendications 2 ou 3, **caractérisé en ce qu'**il est muni d'un orifice de sortie (10), qui est déporté de 90° par rapport aux saillies (7) et qui saillit à travers la paroi d'enveloppe (17) du boîtier (2).

5. Presse-fruits (1) selon l'une quelconque des revendications 1 à 4, **caractérisé en ce qu'**il est muni d'un orifice central dans la paroi de son fond, à travers lequel saillit un arbre d'entraînement (3), destiné à entraîner l'élément.

6. Presse-fruits (1) selon l'une quelconque des revendications 1 à 5, **caractérisé en ce qu'**un manipulateur (9) permettant de pivoter la coupelle collectrice (4) est disposé au-dessus de l'orifice de sortie (10).

7. Presse-fruits (1) selon l'une quelconque des revendications 1 à 6, **caractérisé en ce que** l'orifice de sortie (10) est muni d'un bec (14).

8. Presse-fruits (1) selon la revendication 7, **caractérisé en ce que** l'angle de pivotement de la coupelle collectrice (4) est délimité vers le haut par une collerette (18) dirigée vers l'intérieur, placée sur le boîtier (2).

9. Presse-fruits (1) selon l'une quelconque des revendications 5 à 8, **caractérisé en ce qu'**une paroi de la coupelle collectrice (4) entourant l'orifice central saillit plus haut que le plus haut niveau (12) pouvant être atteint par le jus de fruit (11) dans cette dernière.

10. Presse-fruits (1) selon l'une quelconque des revendications 1 à 9, **caractérisé en ce que** sous la coupelle collectrice (4), le boîtier (2) est muni d'une paroi de fond (19) qui délimite l'angle de pivotement de la coupelle collectrice (4) vers le bas.

11. Presse-fruits (1) selon la revendication 10, **caractérisé en ce que** la paroi de fond (19) est inclinée vers le bas, vers les deux côtés, à partir d'une ligne s'étendant à travers son point médian et parallèle à l'axe de pivotement.

12. Presse-fruits (1) selon l'une quelconque des revendications 1 à 11, **caractérisé en ce qu'**un moyen d'enclenchement (15) coopérant avec un moyen d'enclenchement (16) du boîtier (2), définissant au moins une première position dans laquelle la coupelle collectrice (4) peut être remplie de jus de fruit (11) et une seconde position, dans laquelle la coupelle collectrice (4) peut être vidée à travers l'orifice de sortie (10) est prévu sur la coupelle collectrice.
